# EUROPÄISCHE PATENTSCHRIFT

(11) **EP 2 479 454 B1**
(45) Veröffentlichungstag und Bekanntmachung des Hinweises auf die Patenterteilung: **13.11.2013**
(21) Anmeldenummer: 12150958.2
(22) Anmeldetag: 12.01.2012
(51) Int. Cl.: F16H 1/14, F16H 1/20, F16H 57/033, F16H 57/025, F16H 57/021, F16H 57/023, F16H 57/038

(54) **Kegelrad-Baukastengetriebe**
Series of conical gear transmissions
Série de transmissions à engrenages coniques

(30) Priorität: 19.01.2011 DE 102011008949
(43) Veröffentlichungstag der Anmeldung: 25.07.2012
(73) Patentinhaber: Getriebebau NORD GmbH & Co. KG, 22941 Bargteheide (DE)
(72) Erfinder: Bouché, Dr. Bernhard, 22941 Bargteheide (DE); Madaus, Andreas, 22949 Ammersbek (DE); Petersen, Dr. Detlev, 21279 Appel (DE)
(74) Vertreter: Glawe, Delfs, Moll

(56) Entgegenhaltungen:
- EP-A1- 0 135 156
- EP-A2- 1 717 488
- DE-A1- 19 917 125
- DE-U1- 9 107 626
- FR-A1- 2 593 257

## Beschreibung

Die Erfindung betrifft ein Kegelrad-Baukastengetriebe mit einem aus Guss gefertigten Gehäuse, das eine antriebsseitige Kammer mit einer Antriebswelle und eine abtriebseitige Kammer mit einer Abtriebswelle umfasst, wobei die Abtriebswelle quer zur Antriebswelle angeordnet ist.

Die EP 0 135 156 A1 offenbart ein Kegelrad-Baukastengetriebe gemäß dem Oberbegriff des Anspruchs 1.

Kegelradgetriebe der eingangs genannten Art werden in Serie industriell hergestellt. Sie sind in vielen Ausführungen bzw. Varianten (Übersetzungen, Baugrößen, Befestigungsanordnungen etc.) erhältlich und in Katalogen aufgelistet. Sie sind dank rationeller Herstellung schnell und preisgünstig lieferbar.

Um dies bewerkstelligen zu können, ist eine rationelle Fertigung derartiger Kegelradgetriebe von besonderer Bedeutung. Sie sind daher üblicherweise mit einem aus Druckguss gefertigten Gehäuse hergestellt. Um die benötigten Getriebeteile, insbesondere das bei Kegelradgetrieben besonders große Abmessungen aufweisende Kegelrad, in dem Gehäuse montieren zu können, ist in vielen Fällen ein Deckel vorgesehen. Er weist solche Abmessungen auf, dass durch ihn das Kegelrad hindurch eingebracht werden kann (beispielsweise Bauserie SK92072 der Getriebebau NORD, Bargteheide).

Der Nachteil eines solchen Deckels liegt darin, dass die hierfür erforderliche Einbauöffnung zum einen zusätzlichen Aufwand in der Herstellung erfordert, weiterhin die Stabilität des Gehäuses mindert und überdies ein erhöhtes Risiko des Ölaustritts aufgrund von Undichtigkeiten bietet.

Der Erfindung liegt die Aufgabe zugrunde, ein Getriebe der eingangsgenannten Art dahingehend zu verbessern, dass es oben genannte Nachteile vermeidet, insbesondere rationeller herzustellen ist.

Die erfindungsgemäße Lösung liegt in einem Baukastengetriebe mit den Merkmalen des Anspruchs 1. Vorteilhafte Weiterbildungen sind Gegenstand der abhängigen Ansprüche.

Bei einem Kegelrad-Baukastengetriebe mit einem Innengehäuse aus Gussmaterial umfassend eine antriebsseitige Kammer und eine abtriebsseitige Kammer, die über eine Kegelradstufe verbunden sind, wobei in der antriebsseitigen Kammer eine Längslagerbohrung für ein Antriebslager einer Antriebswelle mit einem Kegelritzel an einem Ende und in der abtriebsseitigen Kammer eine Querlagerbohrung für Abtriebslager einer Abtriebswelle beidseitig eines Kegelrads angeordnet sind, und die Abtriebswelle quer zur Antriebswelle geführt ist und auf sie direkt oder über eine Zwischenstufe ein Antriebsmotor wirkt, ist gemäß der Erfindung vorgesehen, dass das Innengehäuse ohne Deckel einstückig mit einem Außengehäuse in Skelettbauweise über Stege verbunden ist, die in Richtung der Abtriebswelle verlaufen und Durchbrechungen beranden, wobei die Längslagerbohrung die Querlagerbohrung vollständig überschneidend in einem der Stege angeordnet ist.

Die Erfindung beruht auf dem Gedanken, durch die Skelettbauweise mit einem das Innengehäuse umgebenden Außengehäuse, die lediglich über einzelne Stege miteinander verbunden sind und der Zwischenraum als vollständig von der einen zur anderen Querseite laufende Durchbrechungen ausgeführt ist, sowohl eine besonders leichte Ausführung wie auch eine besonders stabile Ausführung zu ermöglichen, die zudem noch rationell herstellbar ist. Mit dem Außengehäuse wird die Steifigkeit des Kegelrad-Baukastengetriebes beträchtlich erhöht. Dies wiederum ermöglicht es, den Materialeinsatz zu reduzieren. Durch die gewählte Bauweise mit dem das Innenmit dem Außengehäuse verbindenden Stegen ist dies leicht möglich. Die Antriebswelle mit der Längsbohrung ist dazu in einem der Stege angeordnet. Die Durchbrechungen sind damit im Wesentlichen glattwandig und ermöglichen somit eine rationale Herstellung im Druckgussverfahren, und zwar ohne dass dazu ein verlorener Kern erforderlich ist. Ein weiterer Vorteil dieser Ausführung besteht darin, dass mit den großflächigen Durchbrechungen eine gute Reinigbarkeit der Durchbrechungen ermöglicht ist. Damit eignet sich das erfindungsgemäße Kegelrad-Baukastengetriebe insbesondere auch zur Anwendung in solchen Fällen, wo es auf Hygiene ankommt, beispielsweise in der Lebensmittelindustrie.

Vorzugsweise sind an dem Außengehäuse an mindestens zwei Seiten Fußleisten mit Löchern für Befestigungsschrauben einstückig angeordnet. Die Löcher können in Querrichtung, d.h. parallel zur Abtriebswelle, als Langlöcher ausgeführt sein. Vorzugsweise sind sie als einseitig zur Lateralseite hin offene Schlitze ausgeführt. Dies ermöglicht eine besonders rationelle Herstellung der Befestigungslöcher bereits im Druckguss. Mit Vorteil sind die Fußleisten mit den Befestigungslöchern an einer Unterseite und einer dem Antrieb gegenüberliegenden Rückseite angeordnet. Dies ermöglicht eine flexible Befestigung des Kegelrad-Baukastengetriebes nahezu in jeder denkbaren Position, ohne dass dazu noch besondere Fußelemente erforderlich sind.

Mit Vorteil sind die antriebsseitige und/oder die abtriebsseitige Kammer im Guss hinterschnittfrei ausgeführt. Diese Gestaltung des Gehäuses bietet den großen Vorteil, dass eine Herstellung im Druckgussverfahren ohne verlorenen Kern besonders einfach ist und keiner komplizierten Gießvorrichtung bedarf. Dies erlaubt eine besonders rationelle Fertigung. Die Montage des Getriebes, insbesondere das Einbringen der Komponenten für Antriebs- bzw. Abtriebswelle kann damit in vormontiertem Zustand erfolgen, was die Montage ebenfalls rationeller macht. Besonders bevorzugt ist es, wenn die Lagerbohrungen für das Antriebslager wie das Abtriebslager bereits in dem einstückig gefertigten Innengehäuse direkt ausgebildet sind. Zusätzliche Einbauteile sind damit nicht mehr erforderlich. Insbesondere ist keine Zwischenwand erforderlich. Das Innengehäuse kann somit zwischenwandfrei ausgeführt sein.

Die Durchbrechungen sind vorzugsweise stufenfrei, mit Ausnahme des die Längslagerbohrung umgebenden Stegs. Unter stufenfrei wird hierbei verstanden, dass von der einen Lateralseite zur anderen (also in Richtung der Abtriebswelle gesehen) die Berandungen der Durchbrechungen im Wesentlichen glatt sind, also keine Hinterschnitte aufweisen. Dies vereinfacht nicht nur die Herstellung, sondern ist auch von Vorteil für eine leichtere Reinigung.

Die antriebsseitige Kammer für die Antriebswelle ist vorzugsweise als Sackloch ausgeführt. Dies bedeutet, dass sie von einer Vorderseite lediglich bis zu ihrem Schnittpunkt mit der Querlagerbohrung, also mit der Abtriebswelle geführt ist, und nicht über diese auf die gegenüberliegende Rückseite des Gehäuses hinaus. Damit werden zusätzliche Dichtflächen und eine zusätzliche Durchbrechung vermieden Dies verschafft Vorteile sowohl in Bezug auf die Dichtigkeit wie auch der Steifigkeit des Gehäuses.

Mit Vorteil ist die Antriebswelle mit Kegelritzel und Antriebslager eine vormontierte Einheit, welche durch Einschieben in die Längslagerbohrung einsetzbar ist. Dies vereinfacht die Fertigung. Zweckmäßigerweise ist die Abtriebswelle mit dem Kegelrad und den beidseitig davon angeordneten Abtriebslagern eine vormontierte Einheit, die in die Quer-Lagerbohrung durch Einschieben einsetzbar ist. Insbesondere weist die Längs- bzw. Querlagerbohrung dazu einen größeren Durchmesser als das Kegelritzel bzw. Kegelrad auf. Dies ermöglicht eine besonders rationelle Fertigung des erfindungsgemäßen Kegelradgetriebes.

Mit Vorteil sind an Stirnseiten der Stege Aufnahmen, insbesondere Gewindebohrungen für Anbauteile, wie Flansche ausgebildet. Dies ermöglicht eine rationelle Bereitstellung von Befestigungsmöglichkeiten für derartige Anbauteile und vergrößert damit die universelle Einsetzbarkeit des erfindungsgemäßen Kegelrad-Baukastengetriebes, und zwar bei Beibehaltung der rationellen Fertigung.

Nachfolgend wird die Erfindung näher erläutert unter Bezugnahme auf die beigefügte Zeichnung erläutert, in der ein vorteilhaftes Ausführungsbeispiel dargestellt ist. Es zeigen:

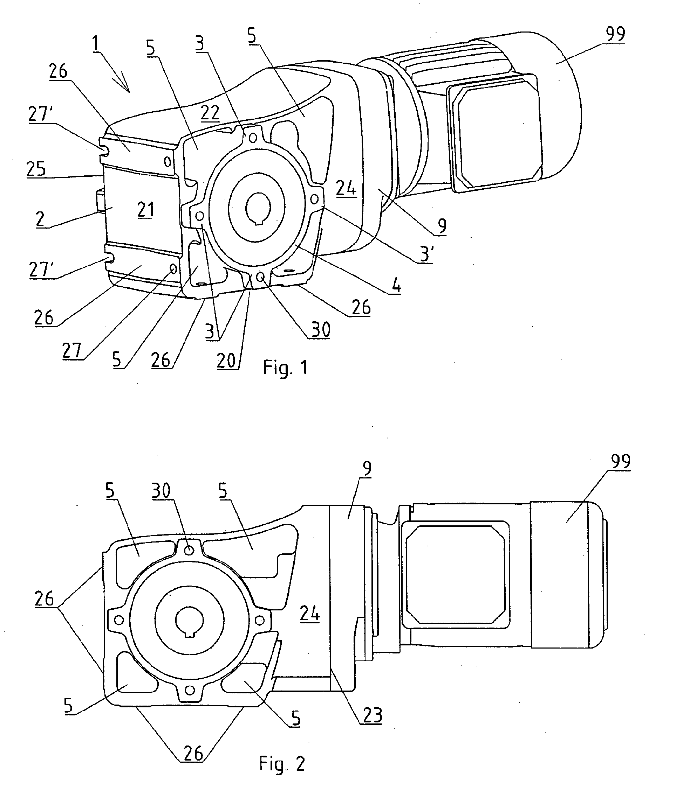

- Fig. 1: eine perspektivische Ansicht eines Kegelrad-Baukastengetriebes mit angeflanschtem Antriebsmotor;
- Fig. 2: eine Seitenansicht zur Figur 1;
- Fig. 3: eine Seitenansicht im Schnitt zu dem in Figur 1 dargestellten Kegelrad-Getriebe; und
- Fig. 4: eine Aufsicht im Schnitt gemäß Figur 3.

Ein in seiner Gesamtheit mit der Bezugsziffer 1 bezeichnetes Kegelrad-Baukastengetriebe ist über eine Zwischenstufe 9 an einem Elektromotor 99 als Antrieb angeflanscht.

Das Kegelrad-Baukastengetriebe umfasst ein Außengehäuse 2, welches an vier Seiten kastenartig ein Innengehäuse 4 umgibt, das über Stege 3 einstückig mit dem Außengehäuse 2 verbunden ist. Im Bereich zwischen den Stegen 3 sind jeweils großflächige Durchbrechungen 5 vorgesehen, die sich von einer Lateralseite 24 des Getriebegehäuses zur gegenüberliegenden Lateralseite 25 erstrecken. Die Durchbrechungen 5 sind von den jeweiligen Lateralseiten 24, 25 aus gesehen hinterschnittfrei und können damit besonders gut gereinigt werden. Damit ergibt sich ein hygienegerechtes Design.

Das Außengehäuse 2 weist an seiner Unterseite 20 und seiner Rückseite 21 jeweils ein Paar von Fußleisten 26 auf. Sie fungieren als Verankerungspunkte des Getriebes 1 an einer Tragstruktur (nicht dargestellt). Dazu weisen die Fußleisten 26 jeweils zwei (bei größeren Baugrößen auch mehr) Befestigungslöcher 27 auf. Sie können als einfache Durchgangsöffnungen ausgeführt sein oder in Gestalt von Langlöchern, die vorzugsweise zu einer Lateralseite hin offen sind. Derartige einseitige offene Schlitze 27' werden auf rationelle Weise bereits unmittelbar mit dem Druckguss des gesamten Getriebegehäuses hergestellt sein. Es sei angemerkt, dass weitere Fußleisten 26 auch an einer Oberseite 22 angeordnet sein können.

An den Lateralseiten 24, 25 weisen die Stege 3 optionale Befestigungsbohrungen 30 auf. An sie können Bauteile, insbesondere weitere Befestigungsflansche (nicht dargestellt), auf rationelle Weise befestigt sein. Die Befestigungsbohrungen 30 können bei Bedarf mit einem Haltegewinde versehen sein.

An einer Vorderseite 23 des Außengehäuses 2 ist eine Stirnradstufe als Zwischenstufe 9 angeordnet. An ihrem äußeren, vom Getriebegehäuse wegweisenden Ende ist der Elektromotor 99 als Antrieb angeflanscht.

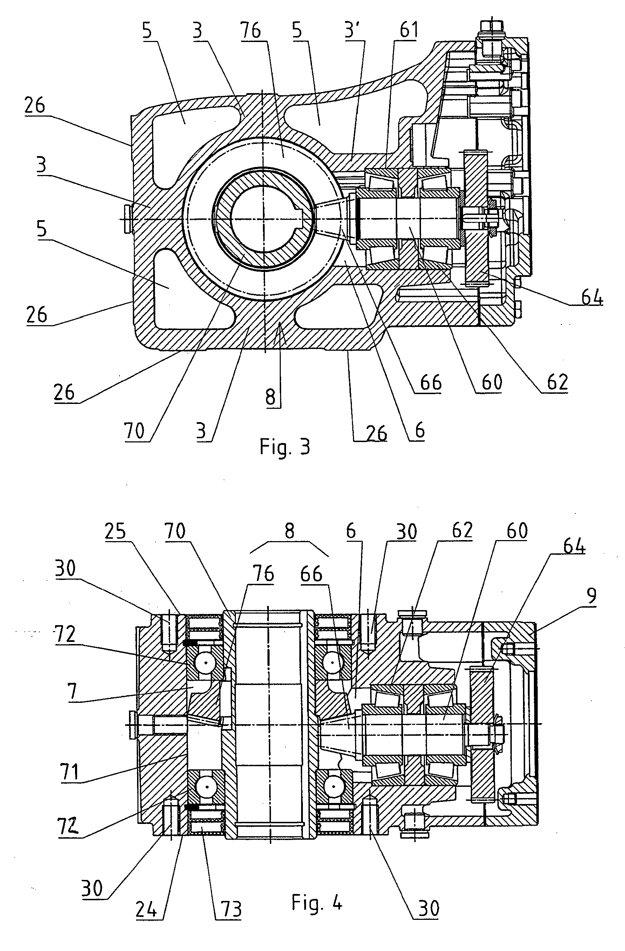

Der Aufbau und die Funktionsweise werden nachfolgend in Bezugnahme auf die in Figuren 3 und 4 dargestellten Schnittzeichnungen erläutert. Ausgehend von der in Figur 3 rechts dargestellten Zwischenstufe erstreckt sich eine Antriebswelle 60, die in einer antriebseitigen Kammer 6 sich vom Außengehäuse 2 über den vorderen Steg 3' in das Innengehäuse 4 erstreckt. Die antriebseitige Kammer 6 weist eine Lagerbohrung 61 zur Aufnahme eines Antriebslagers 62 für die Antriebswelle 60 auf. In dem dargestellten Ausführungsbeispiel ist das Antriebslager 62 als ein Doppelkegelrollenlager ausgeführt, um eine ausreichende Schubfestigkeit sowohl für Druck- wie auch Zug-Beanspruchung zu erreichen. Die Lagerbohrung 61 weist eine größere Weite als der weiter innenliegende Bereich der antriebseitigen Kammer 6 auf und ist von außen direkt zugänglich. Am vorderen, dem Antriebsmotor 99 zugewandten Ende der Antriebswelle 60 ist ein Getrieberad 64 angeordnet. Dieses kämmt mit einem Treibritzel (nicht dargestellt), auf welches direkt oder indirekt der an der Zwischenstufe 9 angeordneten Motor 99 wirkt. Am hinteren Ende der Antriebswelle 60 ist ein Kegelritzel 66 einer Kegelradstufe 8 angeordnet.

Die Kegelradstufe 8 umfasst weiter ein Kegelrad 76, das etwa mittig auf einer Abtriebswelle 70 angeordnet ist. Die Abtriebswelle 70 ist quer zur Antriebswelle 60 ausgerichtet, und zwar derart, dass sie von einer Lateralseite 24 des Innengehäuses 4 zu der gegenüberliegenden Lateralseite 25 führt. Sie ist aufgenommen in eine abtriebseitige Kammer 7 des Innengehäuses 4. Diese umfasst eine Querlagerbohrung 71, in die beidseitig das Kegelrad 76 jeweils ein Abtriebslager 72 eingesetzt ist. Hierbei sind die Abmessungen so gewählt, dass das Kegelrad 76 einen kleineren Durchmesser als das Abtriebslager 72 aufweist. Die Abtriebslager 72 sind zu den jeweiligen Lateralseiten 24, 25 durch Wellendichtringe 73 geschützt.

Das Innengehäuse 4 ist über drei verhältnismäßig dünne Stege 3 mit der Unterseite 20, der Rückseite 21 und der Oberseite 22 des Außengehäuses 2 verbunden. Ein vierter Steg 3' zur Vorderseite 23 ist verdickt ausgeführt; in ihm ist die antriebseitige Kammer 6 angeordnet. An Stirnflächen der Stege 3, 3' sind Bohrungen 30 zur Befestigung von Anbauteilen, insbesondere Flanschen (nicht dargestellt) ausgeformt, die mit einem Innengewinde versehen sind.

Die Antriebswelle 60 mit ihren Lagern 62, dem Stirnrad 64 und dem Kegelritzel 66 kann als vormontierte Einheit ausgeführt sein. Dasselbe gilt für die Abtriebswelle 70, die zusammen mit dem Kegelrad 76 und den beidseitig davon angeordneten Abtriebslagern 72 eine vormontierte Einheit bildet. Dank der erfindungsgemäßen hinterschnittfreien Gestaltung der abtriebseitigen Kammer 7 kann die vormontierte Einheit mit der Abtriebswelle 70 von einer Lateralseite 24 in die Kammer 7 in ihrer Gesamtheit eingeführt werden. Ist sie montiert, kann in entsprechender Weise die vormontierte Antriebseinheit mit der Antriebswelle 60 von der Vorderseite 23 in die ebenfalls hinterschnittfrei ausgeführte antriebseitige Kammer 6 eingesetzt werden. Hierbei kommt das Kegelritzel 66 in Eingriff mit dem Kegelrad 76. Damit ist die Kegelradstufe 8 funktionsfähig. Auf diese Weise kann eine besonders einfache und rationelle Montage erfolgen.

Das Innengehäuse 4 ermöglicht mit seinen hinterschnittfrei ausgeführten Kammern 6 und 7 und den großflächigen Durchbrechungen 5, die von dem Außengehäuse 2 und den Stegen 3, 3' berandet sind, ein besonders leicht bauendes und rationell im Druckgussverfahren ohne verlorenen Kern herzustellendes deckelfreies Gehäuse für ein Kegelradgetriebe.

## Patentansprüche

1. Kegelrad-Baukastengetriebe mit einem Innengehäuse (4) aus Gussmaterial, das eine antriebseitige Kammer (6) und eine abtriebseitige Kammer (7) umfasst, die über eine Kegelradstufe (8) verbunden sind, wobei in der antriebseitigen Kammer (6) eine Längslagerbohrung (61) für ein Antriebslager (62) einer Antriebswelle (60) mit einem Kegelritzel (66) an einem Ende und in der abtriebseitigen Kammer (7) eine Querlagerbohrung (71) für Abtriebslager (72) einer Abtriebswelle (70) beidseitig eines Kegelrads (76) angeordnet sind, wobei die Abtriebswelle (70) quer zur Antriebswelle (60) geführt ist und auf die Antriebswelle (60) direkt oder über eine Zwischenstufe (9) ein Antriebsmotor (99) wirken kann,
**dadurch gekennzeichnet, dass**
das Innengehäuse (4) ohne Deckel einstückig mit einem Außengehäuse (2) in Skelettbauweise über Stege (3, 3') verbunden ist, die in Richtung der Abtriebswelle (70) verlaufen und vorzugsweise glattwandige Durchbrechungen (5) beranden, wobei die Längslagerbohrung (61) die Querlagerbohrung (71) vollständig überschneidend in einem der Stege (3') angeordnet ist.

2. Kegelrad-Baukastengetriebe nach Anspruch 1, **dadurch gekennzeichnet, dass** am Außengehäuse (2) Befestigungslöcher (27) an mehreren Seiten (20, 21) angeordnet sind.

3. Kegelrad-Baukastengetriebe nach Anspruch 2, **dadurch gekennzeichnet, dass** die Befestigungslöcher (27) als Langlöcher ausgeführt und schlitzartig zu Lateralseiten (24, 25) des Außengehäuses (2) hin offen sind.

4. Kegelrad-Baukastengetriebe nach einem der vorangehenden Ansprüche, **dadurch gekennzeichnet, dass** die antriebseitige Kammer (6) und/oder die abtriebseitige Kammer (7) im Guss hinterschnittfrei sind.

5. Kegelrad-Baukastengetriebe nach einem der vorangehenden Ansprüche, **dadurch gekennzeichnet, dass** die antriebseitige Kammer (6) und/oder die abtriebseitige Kammer (7) zwischenwandfrei sind.

6. Kegelrad-Baukastengetriebe nach einem der vorangehenden Ansprüche, **dadurch gekennzeichnet, dass** die Durchbrechungen (5) stufenfrei sind.

7. Kegelrad-Baukastengetriebe nach einem der vorangehenden Ansprüche, **dadurch gekennzeichnet, dass** die antriebseitige Kammer (6) als ein Sackloch ausgeführt ist.

8. Kegelrad-Baukastengetriebe nach einem der vorangehenden Ansprüche, **dadurch gekennzeichnet, dass** die Abtriebswelle (70) als vormontierte Einheit mit dem Kegelrad (76) und den beidseitig davon angeordneten Abtriebslagern (72) von einer Lateralseite (24) des Innengehäuses (4) einsetzbar ist.

9. Kegelrad-Baukastengetriebe nach einem der vorangehenden Ansprüche, **dadurch gekennzeichnet, dass** die Querlagerbohrung (71) einen größeren Durchmesser als das Kegelrad (76) aufweist.

10. Kegelrad-Baukastengetriebe nach einem der vorangehenden Ansprüche, **dadurch gekennzeichnet, dass** die Antriebswelle (60) als vormontierte Einheit mit dem Kegelritzel (66) und dem Antriebslager (62) einsetzbar ist.

11. Kegelrad-Baukastengetriebe nach einem der vorangehenden Ansprüche, **dadurch gekennzeichnet, dass** an Stirnseiten der Stege (3, 3') Aufnahmen, insbesondere Gewindebohrungen (30), für Anbauteile ausgebildet sind.

12. Kegelrad-Baukastengetriebe nach einem der vorangehenden Ansprüche, **dadurch gekennzeichnet, dass** als die Zwischenstufe (9) eine Stirnradstufe mit einem Stirnrad (64) an der Antriebswelle (60) vorgesehen ist.

## Claims

1. Modular bevel gear mechanism having an inner housing (4) which is made from cast material and comprises a drive-side chamber (6) and an output-side chamber (7) which are connected via a bevel gear stage (8), a longitudinal bearing hole (61) being arranged in the drive-side chamber (6) for a drive bearing (62) of a drive shaft (60) with a bevel pinion (66) at one end, and a transverse bearing hole (71) being arranged in the output-side chamber (7) for output bearings (72) of an output shaft (70) on both sides of a bevel gear (76), the output shaft (70) being guided transversely with respect to the drive shaft (60), and it being possible for a drive motor (99) to act on the drive shaft (60) directly or via an intermediate stage (9), **characterized in that** the inner housing (4) is connected without cover integrally to an outer housing (2) in a skeleton construction via webs (3, 3') which run in the direction of the output shaft (70) and preferably form the margins of smooth-walled apertures (5), the longitudinal bearing hole (61) being arranged so as to intersect the transverse bearing hole (71) completely in one of the webs (3').

2. Modular bevel gear mechanism according to Claim 1, **characterized in that** fastening holes (27) are arranged on the outer housing (2) on a plurality of sides (20, 21).

3. Modular bevel gear mechanism according to Claim 2, **characterized in that** the fastening holes (27) are configured as slots and are open in the manner of slits towards lateral sides (24, 25) of the outer housing (2).

4. Modular bevel gear mechanism according to one of the preceding claims, **characterized in that** the drive-side chamber (6) and/or the output-side chamber (7) are/is free of undercuts in the casting.

5. Modular bevel gear mechanism according to one of the preceding claims, **characterized in that** the drive-side chamber (6) and/or the output-side chamber (7) are/is free of intermediate walls.

6. Modular bevel gear mechanism according to one of the preceding claims, **characterized in that** the apertures (5) are free of steps.

7. Modular bevel gear mechanism according to one of the preceding claims, **characterized in that** the drive-side chamber (6) is configured as a blind hole.

8. Modular bevel gear mechanism according to one of the preceding claims, **characterized in that** the output shaft (70) can be inserted from a lateral side (24) of the inner housing (4) as a pre-assembled unit with the bevel gear (76) and the output bearings (72) which are arranged on both sides thereof.

9. Modular bevel gear mechanism according to one of the preceding claims, **characterized in that** the transverse bearing hole (71) has a greater diameter than the bevel gear (76).

10. Modular bevel gear mechanism according to one of the preceding claims, **characterized in that** the drive shaft (60) can be inserted as a pre-assembled unit with the bevel pinion (66) and the drive bearing (62).

11. Modular bevel gear mechanism according to one of the preceding claims, **characterized in that** receptacles, in particular threaded holes (30), for attachment components are formed on end sides of the webs (3, 3').

12. Modular bevel gear mechanism according to one of the preceding claims, **characterized in that** a spur gear stage with a spur gear (64) on the drive shaft (60) is provided as the intermediate stage (9).

## Revendications

1. Série de transmissions à engrenages coniques comprenant un boîtier interne (4) en matériau de fonte, qui comprend une chambre du côté de l'entraînement (6) et une chambre du côté de la sortie (7) qui sont reliées par le biais d'un seuil à engrenages coniques (8), étant entendu que dans la chambre du côté de l'entraînement (6), un alésage de palier longitudinal (61) pour un palier d'entraînement (62) d'un arbre d'entraînement (60) ayant un pignon à cônes (66) est agencé à une extrémité, et dans la chambre du côté de la sortie (7), un alésage de palier transversal (71) pour un palier de sortie (72) d'un arbre d'entraînement (70) est agencé de chaque côté d'un engrenage conique (76), étant entendu que l'arbre d'entraînement (70) est dirigé transversalement par rapport à l'arbre d'entraînement (60) et qu'un moteur d'entraînement (99) peut agir sur l'arbre d'entraînement (60) directement ou par l'intermédiaire d'un seuil intermédiaire (9),
**caractérisée**
**en ce que** le boîtier interne (4) sans couvercle est relié d'une seule pièce avec un boîtier externe (2) dans une construction en ossature métallique par le biais de traverses (3, 3') qui s'étendent dans la direction de l'arbre d'entraînement (70) et sont de préférence adjacentes à des découpures à parois lisses (5), étant entendu que l'alésage de palier longitudinal (61) est agencé dans l'une des traverses (3') en recoupant entièrement l'alésage de palier transversal (71).

2. Série de transmissions à engrenages coniques selon la revendication 1, **caractérisée en ce que** des trous de fixation (27) sont agencés sur plusieurs côtés (20, 21) sur le boîtier externe (2).

3. Série de transmissions à engrenages coniques selon la revendication 2, **caractérisé en ce que** les trous de fixation (27) sont réalisés en tant que trous oblongs et sont ouverts à la manière de fentes vers les côtés latéraux (24, 25) du boîtier externe (2).

4. Série de transmissions à engrenages coniques selon l'une des revendications précédentes, **caractérisée en ce que** la chambre du côté de l'entraînement (6) et/ou la chambre du côté de la sortie (7) sont réalisées en fonte sans contre-dépouille.

5. Série de transmissions à engrenages coniques selon l'une des revendications précédentes, **caractérisée en ce que** la chambre du côté de l'entraînement (6) et/ou la chambre du côté de la sortie (7) sont réalisées sans paroi intermédiaire.

6. Série de transmissions à engrenages coniques selon l'une des revendications précédentes, **caractérisée en ce que** les découpures (5) ne présentent pas de seuil.

7. Série de transmissions à engrenages coniques selon l'une des revendications précédentes, **caractérisée en ce que** la chambre du côté de l'entraînement (6) est réalisée comme un trou borgne.

8. Série de transmissions à engrenages coniques selon l'une des revendications précédentes, **caractérisée en ce que** l'arbre d'entraînement (70) peut être inséré, en tant qu'unité prémontée, avec l'engrenage conique (76) et les paliers de sortie (72) agencés de chaque côté de celui-ci depuis un côté latéral (24) du boîtier interne (4).

9. Série de transmissions à engrenages coniques selon l'une des revendications précédentes, **caractérisée en ce que** l'alésage de palier transversal (71) présente un plus grand diamètre que l'engrenage conique (76).

10. Série de transmissions à engrenages coniques selon l'une des revendications précédentes, **caractérisée en ce que** l'arbre d'entraînement (60) peut être inséré, en tant qu'unité prémontée, avec le pignon à cônes (66) et le palier d'entraînement (62).

11. Série de transmissions à engrenages coniques selon l'une des revendications précédentes, **caractérisée en ce que** des logements, en particulier des alésages filetés (30), pour des pièces à ajouter sont réalisés sur des côtés frontaux des traverses (3, 3').

12. Série de transmissions à engrenages coniques selon l'une des revendications précédentes, **caractérisée en ce qu'**un seuil de roue droite ayant une roue à denture droite (64) est prévue, en tant que seuil intermédiaire (9), sur l'arbre d'entraînement (60).
